# EUROPÄISCHE PATENTSCHRIFT

(11) **EP 0 671 581 B1**
(45) Veröffentlichungstag und Bekanntmachung des Hinweises auf die Patenterteilung: **07.01.1999**
(21) Anmeldenummer: 95103224.2
(22) Anmeldetag: 07.03.1995
(51) Int. Cl.: F16L 3/24, F16B 37/04, F16B 2/18, F16B 29/00, F16B 37/02

(54) **Befestigungsvorrichtung zur Befestigung von Rohren oder dergleichen Gegenständen**
Supporting device for supporting pipes or the like
Dispositif de fixation pour la fixation de tuyaux ou similaires

(30) Priorität: 12.03.1994 DE 4408419
(43) Veröffentlichungstag der Anmeldung: 13.09.1995
(73) Patentinhaber: DIAG DESIGN AG, CH-6300 Zug (CH)
(72) Erfinder:
(74) Vertreter: Schmitt, Hans, Dipl.-Ing.

(56) Entgegenhaltungen:
- EP-A- 0 533 566
- EP-A- 0 555 187
- CH-A- 318 370
- DE-A- 2 914 431
- DE-C- 4 128 157
- DE-U- 9 112 540
- FR-A- 1 235 665
- FR-A- 2 626 942
- US-A- 4 429 440

## Beschreibung

Die Erfindung betrifft eine Befestigungsvorrichtung zur Befestigung von Rohren oder dergleichen Gegenständen, die eine Verankerungseinheit und eine Montageschiene mit einer Schienenöffnung hat, welche Schienenöffnung beidseits von Schienen-Längswänden begrenzt ist, die an ihren einander zugewandten Innenseiten Haltevorsprünge aufweisen, welche das Stützteil einer Verankerungseinheit hintergreift, die mit dem zu befestigenden Gegenstand über einen Verbindungsstab verbunden ist, wobei die Verankerungseinheit einen die freien Schienen-Längsränder beaufschlagenden Gegenhalter hat.

Derartige Befestigungsvorrichtungen werden beispielsweise eingesetzt, um die Rohrleitungen eines Lüftungssystems oder einer Klimaanlage am Boden, an den Wänden oder der Decke eines Gebäudes befestigen zu können. Dabei werden mehrere Montageschienen über die Längserstreckung der Rohrleitungen verteilt, wobei jede einzelne Montageschiene auch zur Befestigung mehrerer Rohrleitungen dienen kann. Diese Rohrleitungen sind über einen Verbindungsstab auf Abstand mit den am Gebäude verankerten Montageschienen verbunden. Während an dem einen Stabende des Verbindungsstabes beispielsweise eine Rohrschelle befestigt ist, die den Rohrumfang der Rohrleitung umgreift, ist an dem anderen Ende des Verbindungsstabes eine Verankerungseinheit vorgesehen, welche an der Montageschiene gehalten ist.

Man kennt bereits eine Befestigungsvorrichtung der eingangs erwähnten Art, deren Verankerungseinheit eine Gewindeplatte als Stützteil hat. Diese Gewindeplatte weist ein Gewindeloch auf, in das eine Gewindestange als Verbindungsstab eingeschraubt ist. Die Gewindestange durchsetzt die Durchstecköffnung eines plattenförmigen Gegenhalters, welcher eine zur vorbekannten Befestigungsvorrichtung zugehörige Montageschiene außenseitig beaufschlagt. Die als Stützteil dienende Gewindeplatte kann in die Schienenöffnung der Montageschiene eingesetzt werden, um sie anschließend mittels der Gewindestange in der Montageschiene so zu verdrehen, daß die Gewindeplatte die Haltevorsprünge hintergreift, welche innenseitig an den die Schienenöffnung begrenzenden Schienen-Längswänden vorgesehen sind. Mittels des Gegenhalters sowie einer Kontermutter, welche den Gegenhalter auf seiner der Gewindeplatte abgewandten Flachseite beaufschlagt, können die Haltevorsprünge in einem nachfolgenden Montageschritt zwischen der Gewindeplatte und dem Gegenhalter eingespannt werden, um die Verankerungseinheit in ihrer Längsrichtung sowie in Längsrichtung der Montageschiene zu sichern.

Durch die verschiedenen, relativ zueinander verdrehbaren Bauteile - Gewindestab, Gewindeplatte und Gegenhalter - sind beim Befestigen und Positionieren jeder Verankerungseinheit an der ihr zugeordneten Montageschiene meist beide Hände erforderlich. Die Montage dieser Verankerungseinheit gestaltet sich entsprechend zeit- und arbeitsaufwendig, insbesondere dann, wenn mehrere Rohrleitungen an einer Montageschiene in gleichmäßigen Abständen zu befestigen sind.

Aus der US-PS 4 429 440 sowie der CH-PS 318 370 sind bereits bügelförmige Verankerungseinheiten bekannt, die mit ihren beiden Bügelschenkeln ein Rohr umfassen und mit je einem an ihren Bügelenden gebildeten Haken je einen an der Montageschiene vorgesehenen Haltevorsprung hintergreifen. Durch eine Verschwenkung der vorbekannten Verankerungseinheiten um ihre Längsmittelachsen können die an den Bügelenden vorgesehenen Haken aus dem Eingriff mit den Haltevorsprüngen gebracht und die Bügelschenkel der Verankerungseinheiten aus der Montageschiene herausgehoben werden.

Am Bügelsteg der vorbekannten Verankerungseinheiten ist jeweils eine Schraube vorgesehen, welche beim Eindrehen in den Bügelsteg das von den Bügelschenkeln umgriffene Rohr zunehmend beaufschlagt, bis dieses Rohr fest zwischen der jeweils bügelförmigen Verankerungseinheit einerseits und der Montageschiene andererseits eingeklemmt ist.

Da das Rohr von den Bügelschenkeln umgriffen und zwischen der Montageschiene und dem Bügelsteg eingeklemmt wird, ist der Anwendungsbereich dieser vorbekannten Befestigungsvorrichtungen auf leichte Rohre mit einem geringen Rohrdurchmesser beschränkt. Da das Rohr in der Montagestellung unmittelbar auf der Montageschiene aufliegt, ist die häufig erforderliche Abhängung der Rohrleitung mit den aus der US-PS 4 429 440 sowie der CH-PS 318 370 vorbekannten Befestigungsvorrichtungen nicht möglich und auch eine unerwünschte Schallübertragung von der Rohrleitung über die Montageschiene auf das Bauwerk läßt sich nicht ohne weiteres verhindern.

Es besteht daher insbesondere die Aufgabe, eine Befestigungsvorrichtung der eingangs erwähnten Art zu schaffen, an der die Rohrleitungen oder dergleichen Gegenstände mittels einer einfach herstellbaren Verankerungseinheit schnell und einfach montiert werden können.

Die erfindungsgemäße Lösung dieser Aufgabe besteht bei der Befestigungsvorrichtung der eingangs erwähnten Art darin, daß das Stützteil der Verankerungseinheit quer zur Schienen-Längsrichtung in die Schienenöffnung in eine Vormontagestellung einrastend einführbar ist und daß dazu das Stützteil elastisch zueinander bewegbare Stützstege hat, die in der Einraststellung der Verankerungseinheit die Haltevorsprünge der Montageschiene hintergreifen.

Um die Verankerungseinheit der erfindungsgemäßen Befestigungsvorrichtung rasch vormontieren zu können, muß lediglich das Stützteil beispielsweise praktisch senkrecht zur Schienen-Längsrichtung in die Schienenöffnung eingeführt werden. In einer nachfolgenden Einraststellung verrastet das Stützteil in der Montageschiene und hintergreift dabei deren Haltevorsprünge. Da das Einrasten des Stützteiles in der Montageschiene deutlich zu hören ist, wird gleichzeitig auch ein "Signal" gegeben, daß die Verankerungseinheit ihre Einraststellung und Haltefunktion erreicht hat. Nach dem Einrasten kann die Verankerungseinheit und die daran zu einer vormontierten Baugruppe befestigten Teile an der Montageschiene präzise in die erforderliche Position verschoben werden. Das Absichern einer als Stützteil dienenden Gewindeplatte in einer bestimmten Drehstellung ist nicht erforderlich, so daß auch Montagefehler praktisch vermieden werden können. Dabei ist die Vor- und Endmontage der Verankerungseinheit an der Montageschiene mit geringem Aufwand verbunden und rasch zu bewerkstelligen.

Daß der Verankerungseinheit zugeordnete Stützteil der erfindungsgemäßen Befestigungsvorrichtung hat elastisch zueinander bewegbare Stützstege, die in der Einraststellung der Verankerungseinheit die Haltevorsprünge der Montageschiene hintergreifen. Beim Einführen des Stützteiles in die Montageschiene werden diese federelastischen Stützstege zueinander bewegt, um anschließend hinter den Haltevorsprüngen deutlich hörbar in ihre Einraststellung auszufedern. In der ausgefederten Position der Stützstege hintergreifen diese die Haltevorsprünge der Montageschiene, die innenseitig an den Schienen-Längswänden im Bereich der freien Längsränder vorgesehen sind.

Um das Stützteil mit möglichst geringem Kraftaufwand in die Schienenöffnung der Montageschiene einführen zu können, ist es zweckmäßig, wenn die elastisch zueinander bewegbaren Stützstege des Stützteiles von dessen Einführende zu den freien Stegenden hin in entgegengesetzte Richtungen nach außen abgewinkelt sind. Beim Einführen des Stützteiles werden somit dessen Stützstege durch die die Schienenöffnung begrenzenden Längsränder der Montageschiene zunächst elastisch zueinander bewegt, um anschließend hinter den Haltevorsprüngen wieder ausfedern zu können. Da die freien Stegenden der Stützstege entgegen der Einführrichtung nach außen abgewinkelt sind, sitzt das Stützteil der Verankerungseinheit in deren Einraststellung besonders sicher und fest in der Montageschiene.

Eine Ausführungsform gemäß der Erfindung sieht beispielsweise vor, daß die Stützstege zumindest bereichsweise jeweils etwa V-oder U-förmig ausgebildet sind. Dabei ist es vorteilhaft, wenn die etwa V- oder U-förmigen Stützstege jeweils mit dem einen Stegende ihrer V-oder U-Form vorzugsweise einstückig miteinander verbunden sind und mit dem anderen freien Stegende den benachbarten Haltevorsprung hintergreifen. Stehen die Haltevorsprünge beispielsweise in Einführrichtung des Stützteiles schräg nach innen über die Schienen-Längswände vor, so können die Stützstege jeweils einen dieser Haltevorsprünge zwischen den beiden Schenkeln ihrer V-oder U-Form einschließen. Bei einer solchen Ausführungsform des Stützteiles sind die etwa V- oder U-förmigen Stützstege auf ihrer dem Gegenhalter zugewandten Seite miteinander verbunden, während sie mit den in die Schienenöffnung vorstehenden Verbindungsbereichen ihrer V-oder U-Formen in Richtung zueinander abgewinkelt sind.

Das Stützteil läßt sich mit geringem Aufwand aus einem einzigen Federstahl-Stück herstellen, wenn die etwa V- oder U-förmigen Stützstege jeweils mit dem einen Stegende ihrer V- oder U-Form vorzugsweise einstückig miteinander verbunden sind und mit dem anderen freien Stegende den benachbarten Haltevorsprung hintergreifen.

Um mit Hilfe der Verankerungseinheit auch schwerere Gegenstände an der Montageschiene befestigen zu können, ist es zweckmäßig, wenn die elastisch zueinander bewegbaren Stützstege mit zunehmender Belastung der Verankerungseinheit in Spreizrichtung aufweitbar sind. Dazu sieht eine bevorzugte Ausführungsform gemäß der Erfindung vor, daß der Verbindungsstab als Gewindestab ausgebildet ist und im Verbindungsbereich der Stützstege angreift und daß dazu in diesem Verbindungsbereich vorzugsweise ein Gewindeloch vorgesehen ist, in das der Gewindestab einschraubbar ist. Durch die an ihrem Verbindungsbereich angreifende Last werden die entgegen der Einführrichtung in entgegengesetzte Richtung nach außen abgewinkelten Stützstege auseinanderbewegt, so daß sich das Stützteil zunehmend aufweitet und an den Schienen-Längswänden der Montageschiene verkrallt.

Um die Verankerungseinheit sowohl in Einführrichtung als auch in Schienenlängsrichtung fest an der Montageschiene sichern zu können, ist es zweckmäßig, wenn das Stützteil und der Gegenhalter der Verankerungseinheit zum Einspannen der Haltevorsprünge der Montageschiene in ihrem Abstand zueinander verstellbar sind. Während das Stützteil der Verankerungseinheit zur Vormontage die Haltevorsprünge der Montageschiene lediglich rastend hintergreift, können die Haltevorsprünge bei der Endmontage zwischen dem Stützteil und dem Gegenhalter fest eingespannt werden.

Die einfache Handhabung und Montage des Verankerungsteiles wird begünstigt, wenn das Stützteil und der Gegenhalter des Verankerungsteiles im wesentlichen drehfest miteinander verbunden sind. Dabei ist grundsätzlich auch eine Ausführungsform des Verankerungsteiles möglich, bei der das Stützteil und der Gegenhalter aus einem entsprechend abgewinkelten einstückigen Metallstreifen oder dergleichen Material hergestellt sind.

Bevorzugt wird jedoch eine Ausführungsform, bei der Stützteil und/oder Gegenhalter Verbindungsstege hat, die an dem jeweils anderen Bauteil der Verankerungseinheit verrastbar sind. Bei einer solch mehrteiligen Verankerungseinheit können das Stützteil und der Gegenhalter auch ohne einen besonderen konstruktiven Aufwand auf einfache Weise relativ zueinander verstellt werden.

Dabei ist es zweckmäßig, wenn das Stützteil federelastische Verbindungsstege hat, die mit zumindest einem Rastvorsprung jeweils in eine Einrastöffnung am Gegenhalter verrastbar sind. Eine solche Ausführungsform begünstigt den vergleichsweise geringen Herstellungsaufwand, da das Stützteil der Verankerungseinheit mit seinen federelastischen Verbindungsstegen lediglich am Gegenhalter verrastet werden muß. Eine solche Rastverbindung läßt gleichzeitig auch genügend Spiel, um das Stützteil und den Gegenhalter zum Einspannen der Haltevorsprünge der Montageschiene in Richtung zueinander zu verstellen.

Eine besondere Ausführungsform gemäß der Erfindung sieht beispielsweise vor, daß jeweils beidseits der elastisch zueinander bewegbaren Stützstege ein Verbindungssteg am Stützteil vorgesehen ist. In einer solchen Ausführungsform hat das Stützteil praktisch eine U-förmige Seitenansicht, wobei das Auffedern der Stützstege und die Verbindung des Stützteils mit dem Gegenhalter praktisch in einer einzigen Funktionsebene erfolgt.

Zweckmäßig ist es, wenn der Gegenhalter Haltestege hat, die jeweils eine Einrastöffnung aufweisen und in die Schienenöffnung vorstehen. Somit verrasten beim Vormontieren der Verankerungseinheit die Verbindungsstege des Stützteils mit den Haltestegen des Gegenhalters.

Eine bevorzugte Ausführungsform gemäß der Erfindung, bei der die Verankerungseinheit besonders einfach und leicht vormontiert werden kann, sieht vor, daß das Stützteil und der Gegenhalter jeweils etwa kreuzförmig ausgebildet sind und daß die freien Endbereiche des einen Bauteiles in Richtung zum jeweils anderen Bauteil der Verankerungseinheit abgewinkelt sind. Dabei liegt der Verbindungsbereich der Stützstege im Schnittpunkt des kreuzförmigen Stützteils. Bei dieser bevorzugten Ausführungsform erfolgt das Auffedern der Verankerungseinheit in der Montageschiene einerseits und die Verbindung ihrer beiden Bauteile - Stützteil und Gegenhalter - andererseits in zwei, etwa um 90° versetzten Funktionsebenen. Stützteil und Gegenhalter greifen dabei ineinander ein und bilden somit eine stabile und in sich kompakte vormontierte Baugruppe, die zur Vormontage des Verankerungsteiles lediglich noch in die Schienenöffnung der Montageschiene eingeführt werden muß.

Um das Stützteil und den Gegenhalter möglichst fest zur Verankerungseinheit vormontieren zu können, ist es zweckmäßig, wenn die Verbindungsstege des Stützteiles die Haltestege des Gegenhalters übergreifen und wenn die Haltestege an ihrem freien Endbereich jeweils Führungsstege aufweisen, die beidseits des den Haltesteg übergreifenden Verbindungssteges angeordnet sind. Durch die mit den Haltestegen vorzugsweise einstückig verbundenen Führungsstege werden der Gegenhalter und das Stützteil drehfest aneinander gehalten, wobei das Stützteil und der Gegenhalter zum Einspannen der Haltevorsprünge bei der Endmontage der Verankerungseinheit entlang den Führungsstegen relativ zueinander verstellt werden können.

Um das Stützteil sowie den Gegenhalter auch in einer Vormontagestellung der Verankerungseinheit möglichst spielfrei miteinander zu verbinden, ist es vorteilhaft, wenn die Haltestege des Gegenhalters jeweils mit zumindest einem Stegfortsatz verbunden sind, die auf den einander zugewandten Seiten der Haltestege vorstehen und als Auflage für das Stützteil ausgebildet sind. Somit kann das Stützteil im Verbindungsbereich seiner Stützstege auf den Stegfortsätzen des Gegenhalters aufliegen, während die Verbindungsstege mit ihren Rastvorsprüngen in die Einrastöffnungen am Gegenhalter eingreifen.

Das Stützteil läßt sich mit seinen Verbindungsstegen mit geringem Aufwand auf den Gegenhalter aufclipsen, wenn die Verbindungsstege jeweils von ihrem Rastvorsprung aus in Richtung zum freien Stegende vorzugsweise schräg nach außen abgewinkelt sind. Das in seiner Einraststellung an der Montageschiene befindliche Stützteil sowie der Gegenhalter müssen nur geringfügig in Richtung zueinander verstellt werden, um die Haltevorsprünge der Montageschiene zwischen diesen beiden Bauteilen der Verankerungseinheit fest einspannen zu können. Deshalb sieht auch eine vorteilhafte Ausführungsform gemäß der Erfindung vor, daß der Stellweg der in Einführrichtung relativ zueinander verstellbaren Bauteile der Verankerungseinheit durch die die Haltestege übergreifenden Verbindungsstege des Stützteils und/oder durch die dem Stützteil zugewandten Öffnungsränder der mit Rastvorsprüngen zusammen-wirkenden Einrastöffnungen des Gegenhalters begrenzt ist.

Eine bevorzugte Ausführungsform gemäß der Erfindung sieht vor, daß das freie Stegende der Stegfortsätze jeweils in Richtung zum Gegenhalter weist und daß der Abstand zwischen diesen Stegenden und dem Gegenhalter den Stellweg der in Einführrichtung relativ zueinander verstellbaren Bauteile festlegt oder zumindest in einer Endstellung begrenzt. Beim Festziehen der Kontermutter geben die Stegfortsätze in ihrem Verbindungs- oder Biegungsbereich mit den Haltestegen solange nach, bis die Haltevorsprünge der Montageschiene zwischen dem Stützteil und dem Gegenhalter eingespannt sind und die Stegenden der Stegfortsätze auf dem Gegenhalter auftreffen. In dieser Verankerungsstellung wird eine weitere Verformung der Stegfortsätze unterbunden und die Verankerungseinheit auch bei hohen Lasten zusätzlich stabilisiert.

Um die Stegfortsätze in der gewünschten Weise leicht verformen zu können, ist es vorteilhaft, wenn die Stegfortsätze vorzugsweise im Verbindungs- oder Biegungsbereich zwischen ihrem zum Gegenhalter weisenden Teilbereich und dem Haltesteg eine nachgiebige Schwächungs- oder Biegestelle aufweisen und wenn diese Schwächungsstelle als Einschnürung oder dergleichen Querschnittsverengung ausgebildet ist.

Durch die bereits oben erwähnten V- oder U-förmigen Teilbereiche der Stützstege kann sich das Stützteil insbesondere bei schweren Lasten sicher in der Montageschiene verkrallen. Um jedoch auch bei Überbelastungen eine übermäßige Verformung der Stützstege in ihren V- oder U-förmigen Teilbereichen zu verhindern, ist es vorteilhaft, wenn die Verbindungsstege eine Einschwenkbewegung der Stützstege in deren V- oder U-förmigem Teilbereich begrenzen und wenn die Verbindungsstege dazu zumindest bereichsweise in dem zwischen diesen Teilbereichen gebildeten Freiraum des Stützteiles angeordnet sind. Dabei sieht eine bevorzugte Ausführungsform gemäß der Erfindung vor, daß die Verbindungsstege ebenfalls jeweils zumindest bereichsweise V- oder U-förmig ausgebildet sind und mit diesen V- oder U-förmigen Teilbereichen in dem zwischen den V- oder U-förmigen Teilbereichen der Stützstege gebildeten Freiraum wenigstens bereichsweise angeordnet sind.

Die Verankerungseinheiten können mit ihren bereits vormontierten Stützteilen und Gegenhaltern auf einfache Weise in die Montageschiene eingeclipst werden. Um das Stützteil und den zugeordneten Gegenhalter jeder Verankerungseinheit bis zum Gebrauch in der vormontierten Stellung sicher zu halten, ist es vorteilhaft, wenn an den Verbindungsstegen im Bereich ihrer Rastvorsprünge jeweils zumindest ein den dem freien Stegende der Haltestege zugewandten Öffnungsrand der Einrastöffnung hintergreifender Widerhaken vorgesehen ist.

Die Verankerungseinheit läßt sich nur "richtig" in die Montageschiene einführen, wenn die Längserstreckung des Stützteils in Schienen-Längsrichtung größer als der lichte Abstand der die Schienenöffnung begrenzenden Schienen-Längswände ist. Wird das Stützteil gegenüber der Montageschiene verdreht, so steht es über die Schienen-Längswände über und läßt sich nicht in die Schienenöffnung einführen. Durch diese besonders vorteilhaft Ausgestaltung der Verankerungseinheit wird dessen einfache Handhabbarkeit wesentlich begünstigt.

Um sicherzustellen, daß der Gewindestab voll in die Gewindeöffnung des Stützteils eingeschraubt ist, ist es vorteilhaft, wenn der Gewindestab an seinem dem Verankerungsteil zugewandten Endbereich eine Schraubsicherung aufweist, die vorzugsweise als Querschnittserweiterung ausgebildet ist.

Eine abgewandelte Ausführungsform gemäß der Erfindung sieht vor, daß das Stützteil zumindest zwei in Einführrichtung der Verankerungseinheit überstehende und mit ihren freien Endbereichen elastisch zueinander bewegbare Stützstege aufweist, daß die Stützstege an diesen freien Endbereichen zum Hintergreifen der Haltevorsprünge in entgegengesetzten Richtungen nach außen vorstehen und daß der Verbindungsstab zum Sichern und/oder Aufspreizen der Stützstege in der ausgefederten Einraststellung in deren Bereich einschraubbar oder einschiebbar ist. Bei dieser Ausführungsform der Verankerungseinheit ist das dem Stützteil zugewandte Stabende des Verbindungsstabes zunächst mit Abstand zu den Stützstegen am Stützteil gehalten, so daß die Stützstege beim Einführen des Stützteils in die Montageschiene gut zueinander einfedern können. Befindet sich das Stützteil anschließend in seiner Einraststellung an der Montageschiene, so wird der Verbindungsstab in den Bereich der Stützstege eingeschraubt, um dort ein nochmaliges Einfedern der Stützstege unter Last zu verhindern. Bei einer solchen Ausführungsform kann es zweckmäßig sein, wenn zwischen dem Verbindungsstab und dem Stützteil eine Drehsicherung vorgesehen ist, die beispielsweise aus zumindest einem, den Gewindestab beaufschlagenden und in Richtung zur Montageschiene vorstehenden Federsteg des Stützteiles ausgebildet sein kann.

Bei allen oben beschriebenen Verankerungsteilen ist es möglich, diese in der Montageschiene in Schienen-Längsrichtung zu verschieben. Um beim Verschieben der Verankerungsteile diese sicher an der Montageschiene führen zu können, und um auch bei schweren Lasten ein Aufweiten der Schienen-Längswände zu verhindern, ist es zweckmäßig, wenn die die freien Schienen-Längsränder beaufschlagenden Bereiche des Gegenhalters diese Schienen-Längsränder außenseitig umgreifen.

Um bei der Endmontage die Verankerungseinheit fest an der Montageschiene sichern zu können, ist es vorteilhaft, wenn der Gegenhalter eine Durchstecköffnung hat, die der Gewindestab durchsetzt und wenn auf dem Gewindestab eine Kontermutter aufschraubbar ist, welche den Gegenhalter auf der dem Stützteil abgewandten Seite beaufschlagt.

Weitere Merkmale der Erfindung ergeben sich aus der folgenden Beschreibung erfindungsgemäßer Ausführungsbeispiele in Verbindung mit den Ansprüchen sowie der Zeichnung. Die einzelnen Merkmale können je für sich oder zu mehreren bei einer Ausführungsform gemäß der Erfindung verwirklicht sein.

Es zeigt:
- Fig. 1: eine Montageschiene in einer perspektivischen Darstellung, an der mittels einer Verankerungseinheit Rohre oder dergleichen Gegenstände befestigt werden können, wobei die Verankerungseinheit ein in der Montageschiene verrastetes Stützteil sowie einen die Schienen-Längsränder beaufschlagenden Gegenhalter aufweist, welche über einen Gewindestab mit einem hier nicht weiter dargestellten Rohr oder dergleichen verbunden sind,
- Fig. 2: den Gegenhalter der Verankerungseinheit aus Fig. 1 in einer Seitenansicht,
- Fig. 3: den Gegenhalter aus Fig. 1 und 2 in einer um 90° verdrehten Seitenansicht,
- Fig. 4: den Gegenhalter aus Fig. 1 bis 3 in einer Draufsicht,
- Fig. 5: das Stützteil der Verankerungseinheit aus Fig. 1 in einer Seitenansicht,
- Fig. 6: das Stützteil aus Fig. 5 in einer um 90° verdrehten Seitenansicht,
- Fig. 7: das Stützteil aus Fig. 5 und 6 in einer Draufsicht,
- Fig. 8: eine Verankerungseinheit in einer Vorderansicht, die aus einem abgelängten Profilstab hergestellt ist und deren Stützteil und Gegenhalter über zwei nach außen verformbare Zwischenstege einstückig miteinander verbunden sind,
- Fig. 9: die in ihrer Montagestellung befindliche und in einer Montageschiene gehaltene Verankerungseinheit aus Figur 8,
- Fig. 10: eine Verankerungseinheit, ähnlich der aus den Figuren 1 bis 7, in einer perspektivischen Darstellung,
- Fig. 11 bis 13: das Stützteil der Verankerungseinheit aus Figur 10 in einer Seitenansicht (Figur 11), in einem demgegenüber um 90° verdrehten Längsschnitt (Figur 12) sowie in einer Draufsicht (Figur 13) und
- Fig. 14 bis 16: den zugehörigen Gegenhalter der Verankerungseinheit aus Figur 10 in einer Seitenansicht (Figur 14), einer demgegenüber um 90° verdrehten Seitenansicht (Figur 15) sowie ebenfalls in einer Draufsicht (Figur 16).

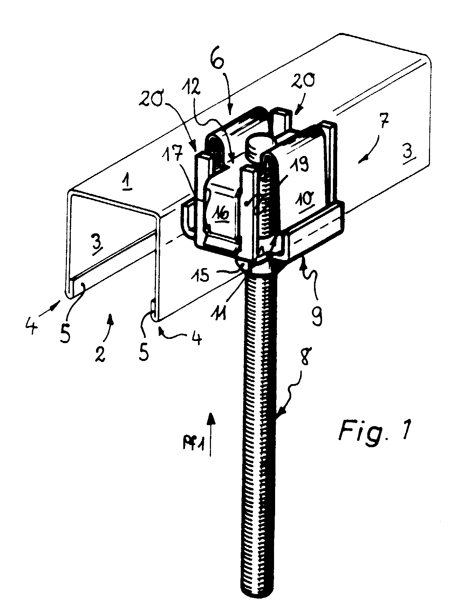

In Fig. 1 ist eine Befestigungsvorrichtung mit einer Montageschiene 1 gezeigt, die zur Befestigung von Rohren oder dergleichen Gegenständen am Boden, an den Wänden oder an der Decke eines Gebäudes dient. Die in ihrem Querschnitt etwa U-förmige Montageschiene 1 hat eine Schienenöffnung 2, die beidseits von Schienen-Längswänden 3 begrenzt ist. Die Schienen-Längswände 3 weisen an ihren einander zugewandten Innenseiten im Bereich der freien Längsränder 4 Haltevorsprünge 5 auf, die als nach innen abgewinkelte Umbördelungen der Längsränder 4 ausgebildet sind.

Wie in Fig. 1 angedeutet ist, werden die an den beiden Längs-Innenseiten der Montageschiene 1 vorgesehenen Haltevorsprünge 5 von dem Stützteil 6 einer Verankerungseinheit 7 hintergriffen, welche mit dem zu befestigenden - hier nicht dargestellten Gegenstand über einen Gewindestab 8 verbunden ist. Die Verankerungseinheit 7 weist einen Gegenhalter 9 auf, der die freien Schienen-Längsränder beaufschlagt.

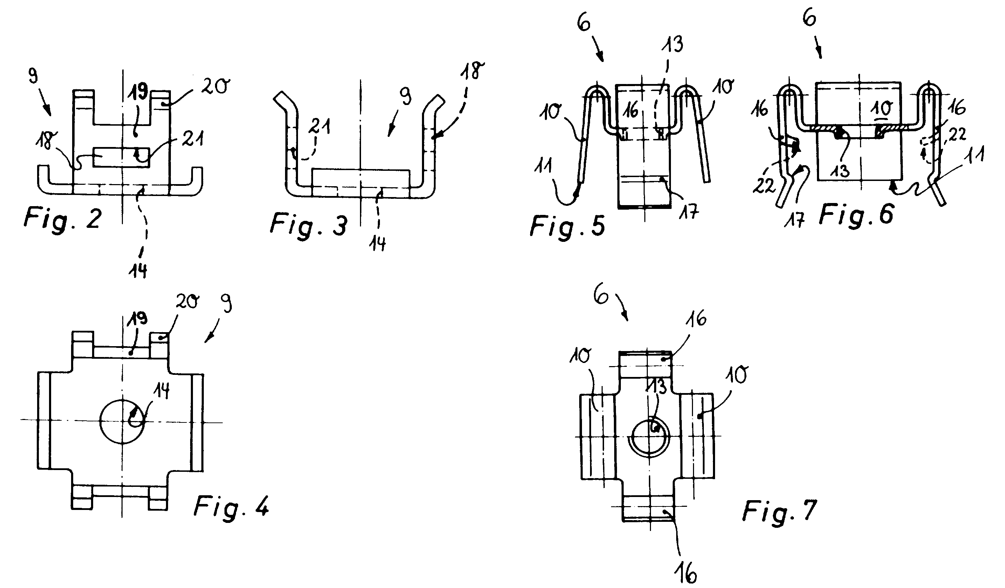

Während der Gegenhalter 9 der Verankerungseinheit 7 in den Figuren 2 bis 4 noch näher dargestellt ist, ist das Stützteil 6 in den Fig. 5 bis 7 gezeigt.

Aus Fig. 1 wird deutlich, daß das Stützteil 6 der Verankerungseinheit 7 praktisch senkrecht zur Schienen-Längsrichtung der Montageschiene 1 in die Schienenöffnung 2 einführbar ist und in der in Figur 1 gezeigten Einraststellung die Haltevorsprünge 5 der Montageschiene 1 rastend hintergreift. Das Stützteil 6 weist dazu zwei elastisch zueinander bewegbare Stützstege 10 auf, die in der Einraststellung der Verankerungseinheit 7 die Haltevorsprünge 5 der Montageschiene 1 hintergreifen.

Wie insbesondere aus Figur 5 deutlich wird, sind die Stützstege 10 des Stützteils 6 zumindest bereichsweise jeweils etwa V- oder U-förmig ausgebildet, wobei die Stützstege 10 jeweils mit dem einen Stegende ihrer V- oder U-Form einstückig miteinander verbunden sind und mit dem anderen freien Stegende den benachbarten Haltevorsprung 5 hintergreifen.

Die elastisch zueinander bewegbaren Stützstege 10 des Stützteils 6 sind von dessen Einführende zu den freien Stegenden 11 hin in entgegengesetzte Richtungen nach außen abgewinkelt. Um auch bei schweren Lasten einen sicheren Halt der Verankerungseinheit 7 in der Montageschiene 1 zu gewährleisten, kann es zweckmäßig sein, wenn die Stützstege 10 des Stützteiles 6 und die Haltestege 19 des Gegenhalters 9 so voneinander beabstandet und/oder ausgebildet sind, daß der Einfederweg der Stützstege 10 in Richtung zueinander durch die Haltestege 19 begrenzt ist.

Der Gewindestab 8 ist in ein Gewindeloch 13 des Stützteils 6 eingeschraubt, welches im Verbindungsbereich 12 der Stützstege 10 angeordnet ist. Da der Gewindestab 8 somit im Verbindungsbereich 12 am Stützteil 6 angreift, werden die elastisch zueinander bewegbaren Stützstege mit zunehmender Belastung der Verankerungseinheit 7 in Spreizrichtung aufgeweitet. Mit Hilfe der Verankerungseinheit 7 können somit auch schwerere Lasten an der Montageschiene 1 befestigt werden.

Zum Vormontieren der Verankerungseinheit 7 sowie eines daran gehaltenen Gegenstandes an der Montageschiene 1 muß die Verankerungseinheit 7 lediglich in Einführrichtung Pfl in die Schienenöffnung 2 der Montageschiene 1 eingeführt werden. Beim Einführen werden die federelastisch zueinander bewegbaren Stützstege in Richtung zueinander nach innen bewegt, um anschließend hinter den Haltevorsprüngen 5 wieder auszufedern. In dieser ausgefederten Stellung der Stützstege 10 hintergreifen diese die Haltevorsprünge 5, ohne daß ein Verdrehen der Verankerungseinheit 7 möglich oder notwendig wäre. Die Verankerungseinheit 7 kann somit auch mit nur einer Hand an der Montageschiene 1 befestigt werden, wobei die Befestigung an der Montageschiene 1 rasch und mit geringem Aufwand zu bewerkstelligen ist. In der in Figur 1 dargestellten Einraststellung kann die Verankerungseinheit 7 an der Montageschiene 1 in Schienen-Längsrichtung verschoben und präzise zur Endmontage positioniert werden.

Um die Verankerungseinheit 7 zur Endmontage in Einführrichtung Pfl sowie in Schienen-Längsrichtung an der Montageschiene 1 zu sichern, sind das Stützteil 6 und der Gegenhalter 9 des Verankerungsteiles 7 zum Einspannen der Haltevorsprünge 5 in ihrem Abstand zueinander verstellbar. Wie insbesondere aus den Figuren 2 bis 4 deutlich wird, hat dabei der Gegenhalter 9 eine Durchstecköffnung 14, die der Gewindestab 8 durchsetzt. Auf diesen Gewindestab 8 ist eine Kontermutter 15 aufschraubbar, welche in der gewählten Haltestellung den Gegenhalter 9 auf der dem Stützteil 6 abgewandten Seite beaufschlagt.

Die einfache Handhabbarkeit und Montage der Verankerungseinheit 7 wird dadurch wesentlich begünstigt, daß das Stützteil 6 und der Gegenhalter 9 des Verankerungsteiles 7 im wesentlichen drehfest miteinander verbunden sind. Dabei bilden das Stützteil 6 und der Gegenhalter 9 mit dem in das Gewindeloch 13 des Stützteils 6 eingeschraubten Gewindestab 8 eine vormontierte Baugruppe, die zur Vormontage der Verankerungseinheit sowie des daran gehaltenen Gegenstandes lediglich noch in die Montageschiene 1 eingeführt werden muß.

Das Stützteil 6 weist dazu zwei federelastische Verbindungsstege 16 auf, die mit zumindest einem Rastvorsprung 17 jeweils in eine Einrastöffnung 18 am Gegenhalter 9 verrastbar sind.

Die Rastvorsprünge 17 können als zungenförmige Einschnitte der Verbindungsstege 16 ausgebildet sein, welche in Richtung zu den Einrastöffnungen 18 des Gegenhalters 9 abgewinkelt sind. Bei der hier dargestellten Verankerungseinheit 7 sind die Rastvorsprünge 17 jedoch als nach innen vorstehende Umbiegungen der Verbindungsstege 16 des Stützteils 6 ausgebildet.

Wie aus den Figuren 1 bis 4 deutlich wird, weist der Gegenhalter 9 Haltestege 19 auf, die jeweils eine Einrastöffnung 18 haben und in die Schienenöffnung 2 vorstehen. Das Stützteil 6 und der Gegenhalter 9 sind jeweils etwa kreuzförmig ausgebildet, wobei der Verbindungsbereich 12 der Stützstege 10 im Schnittpunkt des kreuzförmigen Stützteils 6 liegt. Die freien Endbereiche des Stützteils 6 einerseits und des Gegenhalters 9 andererseits sind in Richtung zum jeweils anderen Bauteil 9, 6 der Verankerungseinheit 7 abgewinkelt. Dabei greifen das Stützteil 6 und der Gegenhalter 9 der vormontierten Baugruppe 7 ineinander, wobei die Verbindungsstege 16 des Stützteiles 6 die Haltestege 19 des Gegenhalters 9 übergreifen. Wie die Figuren 1 und 2 deutlich zeigen, sind die Haltestege 19 randseitig jeweils mit zwei Führungsstegen 20 einstückig verbunden, die beidseits des den Haltesteg 19 übergreifenden Verbindungssteges 16 angeordnet sind. Durch diese Ausgestaltung sind das Stützteil 6 einerseits und der Gegenhalter 9 andererseits drehfest aneinander gehalten, wobei die Bauteile 6, 9 entlang den Führungsstegen 20 in Einführrichtung Pfl zueinander verstellt werden können. Die Führungsstege 20 stabilisieren das Stützteil 6 und Gegenhalter 9 insbesondere in dem vormontierten Zustand ohne die Gewindestange 8 (automatische Montage der Gewindestange).

Die federelastisch aufweitbaren Verbindungsstege 16 des hier vorzugsweise aus Federstahl hergestellten Stützteiles 6 sind jeweils von ihrem Rastvorsprung 17 aus in Richtung zum freien Stegende schräg nach außen abgewinkelt. Das Stützteil 6 läßt sich somit auch maschinell auf den Gegenhalter 9 der Verankerungseinheit 7 aufclipsen.

Bereits ein geringfügiger Stellweg zwischen Stützteil 6 und Gegenhalter 9 ist ausreichend, um die Haltevorsprünge 5 der Montageschiene 1 zwischen diesen Bauteilen 6, 9 der Verankerungseinheit 7 einspannen zu können. Deshalb ist es zweckmäßig, wenn der Stellweg der in Einführrichtung Pf1 relativ zueinander verstellbaren Bauteile 6, 9 der Verankerungseinheit 7 durch die die Haltestege 19 übergreifenden Verbindungsstege 16 des Stützteils 6 einerseits und den dem Stützteil 6 zugewandten Öffnungsrändern 21 der mit den Rastvorsprüngen 17 zusammenwirkenden Einrastöffnungen 18 des Gegenhalters 9 andererseits begrenzt ist.

Wie in Fig. 6 angedeutet ist, kann dazu an den Verbindungsstegen 16 jeweils auch zumindest eine nach innen gerichtete oder abgewinkelte Lasche 22 oder dergleichen Anschlagsausformung vorgesehen sein, die in einer der beiden Endstellungen des Stellweges die Haltestege 19 des Gegenhalters 9 beaufschlagen. Diese Laschen 22 oder dergleichen wirken entgegen, daß der Gegenhalter 9 beim Einschieben der Verankerungseinheit 7 in die Montageschiene 1 in das Stützteil 6 geschoben wird, wodurch ein Ausfedern und Verrasten der Stütz- oder Federstege 10 verhindert werden könnte. Dies gilt insbesondere dann, wenn die Verankerungseinheit 7 beim Einschieben nicht an der Gewindestange 8, sondern beispielsweise am Gegenhalter 9 ergriffen wird.

Um die leichte Montage der Verankerungseinheit 7 zu begünstigen und um eine falsche Montage dieser Baugruppe auszuschließen, ist die Längserstreckung des Stützteiles 6 in Schienen-Längsrichtung größer als der lichte Abstand der die Schienenöffnung 2 begrenzenden Schienen-Längswände. Wird also das Stützteil 6 in einer verdrehten Stellung in Einführrichtung Pfl zur Montageschiene 1 bewegt, so steht das Stützteil 6 seitlich über die Montageschiene 1 über und kann solange nicht in die Montageschiene 1 eingeführt werden, bis die Längserstreckung des Stützteiles 6 in die Schienen-Längsrichtung orientiert ist.

Um sicherzustellen, daß der Gewindestab 8 stets vollständig in das Gewindeloch 13 des Stützteils 6 eingeschraubt ist, weist der Gewindestab 8 an seinem der Verankerungseinheit 7 zugewandten Endbereich vorzugsweise eine Querschnittserweiterung oder dergleichen Schraubsicherung auf. Diese Querschnittserweiterung kann beispielsweise durch eine endseitige Aufpilzung des Gewindestabes 8 erfolgen.

Um die vormontierte Verankerungseinheit 7 leicht entlang der Montageschiene 1 verschieben zu können und um ein Aufweiten der Schienen-Längswände 3 der Montageschiene 1 auch bei hohen Lasten zu verhindern, umgreifen die die freien Schienen-Längsränder beaufschlagenden Bereiche des Gegenhalters 9 diese Schienen-Längsränder der Montageschiene 1 außenseitig.

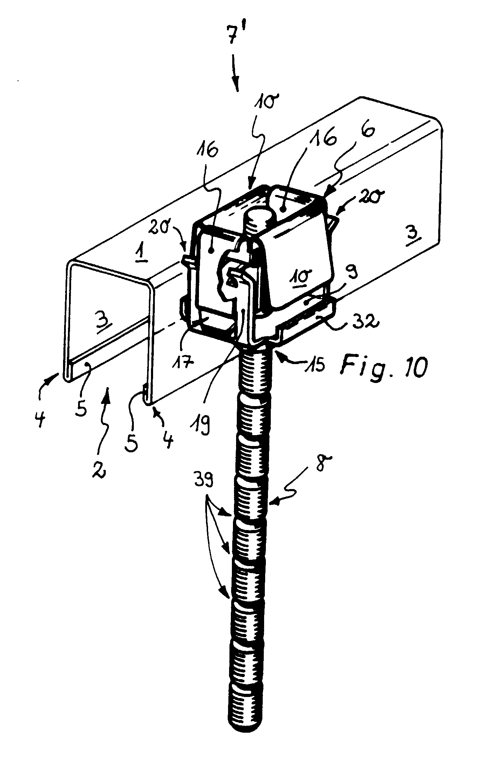

Bereits durch eine geringfügige Drehung der Kontermutter 15 auf dem Gewindestab 8 können das Stützteil 6 und der Gegenhalter 9 derart zueinander bewegt werden, daß die Verankerungseinheit 7 fest an der Montageschiene 1 gehalten ist. Wie aus Figur 1 deutlich wird, sind die Stützstege 10 zunächst in Einführrichtung Pfl nach oben abgewinkelt, um anschließend wieder in Richtung zum Gegenhalter 9 zu weisen. Insbesondere auch durch diese Ausgestaltung des Stützteiles 6 kann der Gewindestab 8 im Gewindeloch 13 des Stützteiles 6 zur Feineinstellung in axialer Richtung verstellt werden. Zur Grobeinstellung des Gewindestabes, welcher auch als Abstandhalter für den zu montierenden Gegenstand dient, kann dieser abgelängt werden. Dabei wird ein Ablängen des Gewindestabes wesentlich erleichtert, wenn er im Verlauf seiner Längserstreckung zumindest eine als Trennstelle dienende vorgefertigte Querschnitts-Schwächungsstelle aufweist. Diese Querschnitts-Schwächungsstelle des Gewindestabes 8 kann beispielsweise als ein in Figur 10 dargestellter Einstich 39 ausgebildet sein.

Mittels der Verankerungseinheit 7 können Rohrleitungen oder dergleichen Gegenstände schnell und einfach an der Montageschiene 1 montiert werden. Dabei ist die Verankerungseinheit 7 mit geringem Aufwand herstellbar.

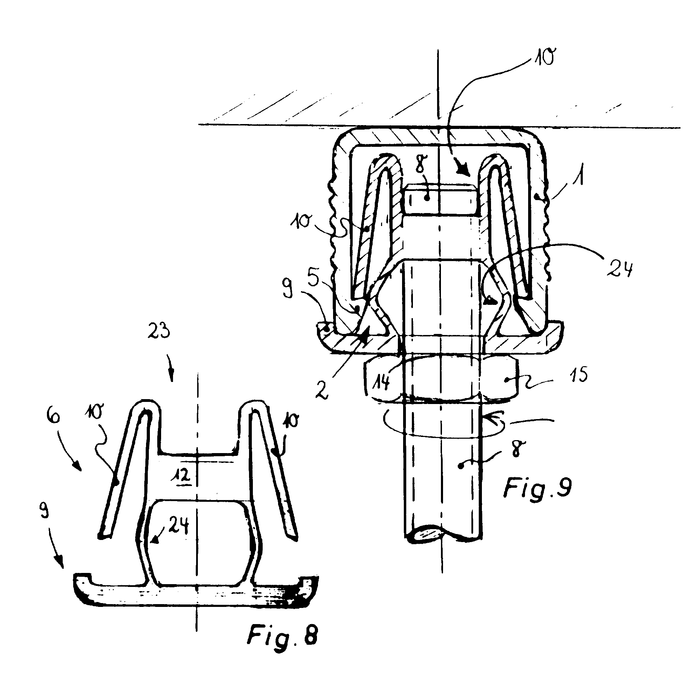

In den Figuren 8 und 9 ist eine Verankerungseinheit 23 dargestellt, bei der das Stützteil 6 und der Gegenhalter 9 über Zwischenstege 24 einstückig miteinander verbunden sind. Diese Zwischenstege sind etwa im gleichmäßigem Abstand um das Gewindeloch 13 des Stützteils 6 und die Durchstecköffnung 14 des Gegenhalters 9 angeordnet. Die Verankerungseinheit 23 ist als Spritzgußteil oder als ein von einem entsprechenden Profilstab abgelängtes Strangfließpreßteil insbesondere aus Aluminium, als Stahlprofil oder als Kunststoff-Extrusionsteil hergestellt. Dabei ist es zweckmäßig, wenn ein Kunststoffteil 23 zumindest im Bereich der Stützstege 10 verstärkt, beispielsweise glasfaser-gefüllt, ist. Nach dem Ablängen des Profilstranges werden in den Rohling die für das Gewindeloch 13 und die Durchstecköffnung 14 vorgesehenen Löcher gebohrt, bevor in das Stützteil 6 das Innengewinde des Gewindeloches 13 geschnitten wird. Die Verankerungseinheit 23 kann somit praktisch in drei, automatisch ablaufenden Arbeitsgängen hergestellt werden. Dabei sind die Herstellungs- und Werkzeugkosten minimal. Durch entsprechende Dimensionierungen des Stützteiles 6 sowie des Gegenhalters 9 können wahlweise sowohl leichte als auch schwere Ausführungen der Verankerungseinheit 23 hergestellt werden.

Wie aus Figur 9 deutlich wird, ist auch die Verankerungseinheit 23 mit ihrem Stützteil 6 quer zur Schienen-Längsrichtung in die Schienenöffnung 2 der Montageschiene 1 in eine Vormontagestellung einrastend einführbar. Dabei hintergreifen die elastisch zueinander bewegbaren Stützstege 10 des Stützteiles 6 der Verankerungseinheit 23 die Haltevorsprünge 5 der Montageschiene 1. Durch Festziehen der Kontermutter 15 können die Haltevorsprünge 5 zwischen dem Stützteil 6 und den Gegenhalter 9 der Verankerungseinheit 23 eingespannt werden.

Beim Festziehen der Kontermutter 15 weichen die Zwischenstege 24 in entgegengesetzte Richtungen zu den Schienen-Längswänden 3 der Montageschiene 1 derart aus, daß diese Zwischenstege 24 jeweils bis etwa zur benachbarten Innenwand der Montageschiene 1 aufweiten. Durch das Aufweiten der zumindest bereichsweise dünnwandigen und entsprechend nachgiebigen Zwischenstege 24 werden die federelastischen Stützstege 10 in ihrer verrasteten Stellung gesperrt.

In Figur 9 ist dargestellt, daß die Stützstege 10 der Verankerungseinheit 23 ebenfalls etwa V- oder U-förmig ausgebildet und mit dem einen Stegende ihrer V- oder U-Form einstückig miteinander verbunden sind. Der Quersteg der V- oder U-Form dieser Stützstege 10 steht jeweils über den Verbindungsbereich 12 mit dem Gewindeloch 13 der Stützstege 10 über. Dabei wird ein Einfallen oder Einbiegen der Stützstege 10 in Richtung zueinander durch den Gewindestab 8 verhindert, der an den über den Verbindungsbereich 12 überstehenden Stützstegen 10 zumindest bereichsweise anliegt oder geringfügig beabstandet ist.

In den Figuren 10 bis 16 ist eine Verankerungseinheit 7' mit ihrem Stützteil 6 sowie ihrem Gegenhalter 9 dargestellt, die der Verankerungseinheit 7 aus den Figuren 1 bis 7 im wesentlichen entspricht. Die Haltestege 19 des Gegenhalters 9 der Verankerungseinheit 7' sind jedoch jeweils mit einem Stegfortsatz 33 verbunden. Die Stegfortsätze 33 der Haltestege 19 stehen auf den einander zugewandten Seiten der Haltestege 19 vor und sind als Auflage für das Stützteil 6 ausgebildet. In der in Figur 10 dargestellten Vormontagestellung, in welcher der Abstand zwischen den Bauteilen 6, 9 noch nicht verringert wurde, sind das Stützteil 6 und der Gegenhalter 9 praktisch spielfrei miteinander verbunden, indem das Stützteil 6 auf den Stegfortsätzen 33 aufliegt und am Gegenhalter 9 durch die Rastvorsprünge 17 seiner Verbindungsstege 16 gehalten ist, welche in die Einrastöffnungen 18 eingreifen.

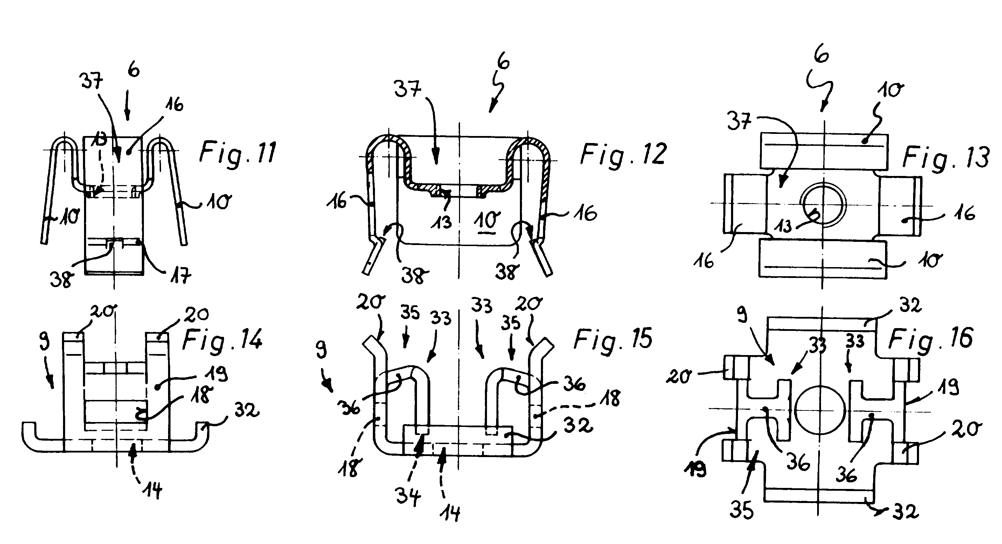

Wie aus den Figuren 14 bis 16 deutlich wird, weist das freie Stegende 34 der Stegfortsätze 33 jeweils in Richtung zum Gegenhalter 9. Dabei ist der Stellweg zwischen dem Stützteil 6 und dem Gegenhalter 9 durch den Abstand zwischen den Stegenden 34 der Stegfortsätze 33 und dem Gegenhalter 9 festgelegt. Beim Festziehen der Kontermutter 15 geben die Stegfortsätze 33 in ihrem Verbindungs- oder Biegungsbereich 35 mit den Haltestegen 19 solange nach, bis die Haltevorsprünge 5 der Montageschiene 1 zwischen den Bauteilen 6, 9 eingespannt sind und die Stegenden 34 auf dem Gegenhalter 9 auftreffen. In dieser Verankerungsstellung wird eine weitere Verformung der Stegfortsätze 33 unterbunden und die Verankerungseinheit 7' auch bei hohen Lasten zusätzlich stabilisiert. Dabei stützen die Stegfortsätze 33 des Gegenhalters 9 das Stützteil 6 in besonders vorteilhafter Weise im Bereich seines Gewindeloches 13 ab, das die am Verbindungsstab 8 hängende Last aufzunehmen hat. Das Auftreffen der Stegenden 34 auf dem Gegenhalter 9 gibt dem Monteur gleichzeitig das Signal, daß die Kontermutter 15 ausreichend angezogen und die Montageschiene 1 von der Verankerungseinheit 7' fest eingespannt ist.

Der Verbindungs- oder Gewindestab 8 weist - wie Figur 10 zeigt, im Verlauf seiner Längserstreckung zumindest eine und hier mehrere als Trennstelle dienende vorgefertigte Querschnitts-Schwächungsstellen 39 auf, die vorzugsweise gleichmäßig voneinander beabstandet sind. Diese im Querschnitt runden Querschnitts-Schwächungsstellen 39 sind als Einstiche ausgebildet und unterbrechen das am Außenumfang des Verbindungsstabes 8 vorgesehene Außengewinde. Die Einstiche sind durch zwei umlaufende Kerbflanken begrenzt, welche einen etwa rechten Winkel zwischen sich einschließen. Der Kerbgrund der Einstiche 39 weist jeweils einen Durchmesser von etwa 4,5 bis 5 mm auf und ist jeweils außerhalb des Gewinde-Querschnittsbereiches angeordnet. Dabei kann der Verbindungsstab 8 aus Metall, insbesondere aus Stahl, oder aus Kunststoff hergestellt sein. Der Verbindungsstab 8 kann im Bereich der Einstiche 39 somit auch ohne Sägewerkzeug an dieser Stelle seiner Längserstreckung durchtrennt und entsprechend dem gewünschten Abstand verkürzt werden. Ein umständliches Absägen des entsprechenden Teilbereiches ist nicht erforderlich. Durch den mit den Einstichen 39 versehenen Verbindungs- oder Gewindestab 8 wird die einfache Handhabbarkeit der Montageschiene 7' noch zusätzlich wesentlich begünstigt. Auf dem Verbindungsstab 8 ist die Kontermutter 15 aufgeschraubt, die den Gegenhalter 9 auf seiner dem Stützteil 6 abgewandten Seite beaufschlagt und zum Einspannen der Haltevorsprünge 5 der Montageschiene 1 dient.

Um den Abstand zwischen den Bauteilen 6, 9 mit geringem Aufwand verringern, die Haltevorsprünge 5 der Montageschiene 1 sicher einspannen und die Stegfortsätze 33 in der gewünschten Weise leicht verformen zu können, ist es zweckmäßig, wenn diese Stegfortsätze 33 im Verbindungs- oder Biegungsbereich 35 mit den Haltestegen 19 eine nachgiebige Schwächungs- oder Biegestelle aufweisen. Wie in Figur 16 dargestellt ist, kann diese Schwächungsstelle beispielsweise als eine Einschnürung, Einformung oder dergleichen Querschnittsverengung 36 des Stegfortsatzes 33 ausgebildet sein.

In Figur 10 ist gezeigt, daß die Verbindungsstege 16 eine beispielsweise lastbedingte Einschwenkbewegung der Stützstege 10 in deren V- oder U-förmigem Teilbereich begrenzen. Die Verbindungsstege 16 der Verankerungseinheit 7' sind dazu, ähnlich wie die Stützstege 10, ebenfalls bereichsweise V- oder U-förmig ausgebildet, wobei sie mit dem einen Teilbereich ihrer V- oder U-Form in dem zwischen den V- oder U-förmigen Teilbereichen der Stützstege 10 gebildeten Freiraum 37 angeordnet sind. Auf der der Kontermutter 15 abgewandten Seite schließen die Verbindungs- und die Stützstege 16, 10 des Stützteiles mit ihren V- oder U-förmigen Teilbereichen etwa in gleicher Höhe ab.

In der in Figur 10 dargestellten Vormontagestellung sind das Stützteil 6 sowie der Gegenhalter 9 der Verankerungseinheit 7' bereits sicher und fest miteinander verbunden. Zu diesem Zweck sind an den Verbindungsstegen im Bereich ihrer Rastvorsprünge jeweils ein Widerhaken oder dergleichen Gegenvorsprung 38 vorgesehen, welche den dem freien Stegende der Haltestege 19 zugewandten Öffnungsrand der Einrastöffnung 18 hintergreifen.

Das Stützteil 6 sowie der Gegenhalter 9 auch der Verankerungseinheit 7' bestehen jeweils aus einem etwa kreuzförmigen Metallzuschnitt und werden durch einen Stanzvorgang sowie einen nachfolgenden Biegevorgang auf einfache Weise hergestellt. Wie in Figur 10 deutlich wird, sind die mit den Haltestegen 19 verbundenen Führungsstege 20 des Gegenhalters 9 der Verankerungseinheit 7' jeweils nach außen abgewinkelt.

## Patentansprüche

1. Befestigungsvorrichtung zur Befestigung von Rohren oder dergleichen Gegenständen, die eine Verankerungseinheit (7, 7', 23) und eine Montageschiene (1) mit einer Schienenöffnung (2) hat, welche Schienenöffnung (2) beidseits von Schienen-Längswänden (3) begrenzt ist, die an ihren einander zugewandten Innenseiten Haltevorsprünge (5) aufweisen, welche das Stützteil (6) einer Verankerungseinheit (7, 7', 23) hintergreift, die (7, 7', 23) mit dem zu befestigenden Gegenstand über einen Verbindungsstab (8) verbunden ist, wobei die Verankerungseinheit (7, 7', 23) einen die freien Schienen-Längsränder (4) beaufschlagenden Gegenhalter (9) hat, dadurch gekennzeichnet, daß das Stützteil (6) der Verankerungseinheit (7, 7', 23) quer zur Schienen-Längsrichtung in die Schienenöffnung (2) in eine Vormontagestellung einrastend einführbar ist und daß dazu das Stützteil (6) elastisch zueinander bewegbare Stützstege (10) hat, die in der Einraststellung der Verankerungseinheit (7, 7', 23) die Haltevorsprünge (5) der Montageschiene (1) hintergreifen.

2. Befestigungsvorrichtung nach Anspruch 1, dadurch gekennzeichnet, daß die elastisch zueinander bewegbaren Stützstege (10) des Stützteiles (6) von dessen Einführende zu den freien Stegenden (11) hin in entgegengesetzte Richtungen nach außen abgewinkelt sind.

3. Befestigungsvorrichtung nach einem der Ansprüche 1 bis 2, dadurch gekennzeichnet, daß die Stützstege (10) zumindest bereichsweise jeweils etwa V- oder U-förmig ausgebildet sind.

4. Befestigungsvorrichtung nach einem der Ansprüche 1 bis 3, dadurch gekennzeichnet, daß die Stützstege (10) jeweils mit dem einen Stegende ihrer V- oder U-Form vorzugsweise einstückig miteinander verbunden sind und mit dem anderen freien Stegende (11) den benachbarten Haltevorsprung (5) hintergreifen.

5. Befestigungsvorrichtung nach einem der Ansprüche 1 bis 4, dadurch gekennzeichnet, daß die elastisch zueinander bewegbaren Stützstege (10) mit zunehmender Belastung der Verankerungseinheit (7, 7', 23) in Spreizrichtung aufweitbar sind.

6. Befestigungsvorrichtung nach einem der Ansprüche 1 bis 5, dadurch gekennzeichnet, daß der Verbindungsstab (8) als Gewindestab ausgebildet ist und im Verbindungsbereich der Stützstege (10) angreift und daß dazu in diesem Verbindungsbereich (12) vorzugsweise ein Gewindeloch (13) vorgesehen ist, in das der Gewindestab (8) einschraubbar ist.

7. Befestigungsvorrichtung nach einem der Ansprüche 1 bis 6, dadurch gekennzeichnet, daß das Stützteil (6) und der Gegenhalter (9) der Verankerungseinheit (7, 7', 23) zum Einspannen der Haltevorsprünge (5) der Montageschiene (1) in Einführrichtung relativ zueinander verstellbar sind.

8. Befestigungsvorrichtung nach einem der Ansprüche 1 bis 7, dadurch gekennzeichnet, daß das Stützteil (6) und der Gegenhalter (9) der Verankerungseinheit (7, 7', 23) im wesentlichen drehfest miteinander verbunden sind.

9. Befestigungsvorrichtung nach einem der Ansprüche 1 bis 8, dadurch gekennzeichnet, daß das Stützteil (6) und/oder der Gegenhalter (9) Verbindungsstege (16) hat, die an dem jeweils anderen Bauteil (9, 6) der Verankerungseinheit (7, 7', 23) verrastbar sind.

10. Befestigungsvorrichtung nach einem der Ansprüche 1 bis 9, dadurch gekennzeichnet, daß das Stützteil (6) federelastische Verbindungsstege (16) hat, die mit zumindest einem Rastvorsprung (17) jeweils in eine Einrastöffnung (18) am Gegenhalter (9) verrastbar sind.

11. Befestigungsvorrichtung nach einem der Ansprüche 1 bis 10, dadurch gekennzeichnet, daß jeweils beidseits der elastisch zueinander bewegbaren Stützstege (10) ein Verbindungssteg (16) vorgesehen ist.

12. Befestigungsvorrichtung nach einem der Ansprüche 1 bis 11, dadurch gekennzeichnet, daß der Gegenhalter (9) Haltestege (19) hat, die jeweils eine Einrastöffnung (18) aufweisen und in die Schienenöffnung (2) vorstehen.

13. Befestigungsvorrichtung nach einem der Ansprüche 1 bis 12, dadurch gekennzeichnet, daß das Stützteil (6) und der Gegenhalter (9) jeweils etwa kreuzförmig ausgebildet sind und daß die freien Endbereiche des einen Bauteiles (6, 9) in Richtung zum jeweils anderen Bauteil (9, 6) der Verankerungseinheit (7, 7') abgewinkelt sind.

14. Befestigungsvorrichtung nach einem der Ansprüche 1 bis 13, dadurch gekennzeichnet, daß das Stützteil (6) und der Gegenhalter (9) ineinander greifen.

15. Befestigungsvorrichtung nach einem der Ansprüche 1 bis 14, dadurch gekennzeichnet, daß die Verbindungsstege (16) des Stützteiles (6) die Haltestege (19) des Gegenhalters (9) übergreifen und daß die Haltestege (19) an ihrem freien Endbereich jeweils Führungsstege (20) aufweisen, die beidseits des den Haltesteg (19) übergreifenden Verbindungssteges (16) angeordnet sind.

16. Befestigungsvorrichtung nach einem der Ansprüche 1 bis 15, dadurch gekennzeichnet, daß die Haltestege (19) des Gegenhalters (9) jeweils mit zumindest einem Stegfortsatz (33) verbunden sind, die (33) auf den einander zugewandten Seiten der Haltestege (19) vorstehen und als Auflage für das Stützteil (6) ausgebildet sind.

17. Befestigungsvorrichtung nach einem der Ansprüche 1 bis 16, dadurch gekennzeichnet, daß die Verbindungsstege (16) jeweils von ihrem Rastvorsprung (17) aus in Richtung zum freien Stegende (11) vorzugsweise schräg nach außen abgewinkelt sind.

18. Befestigungsvorrichtung nach einem der Ansprüche 1 bis 17, dadurch gekennzeichnet, daß der Stellweg der in Einführrichtung relativ zueinander verstellbaren Bauteile (6, 9) der Verankerungseinheit (7, 7') durch die die Haltestege (19) übergreifenden Verbindungsstege (16) des Stützteils (6) und/oder durch die dem Stützteil (6) zugewandten Öffnungsrändern (21) der mit den Rastvorsprüngen (17) zusammenwirkenden Einrastöffnungen (18) des Gegenhalters (9) begrenzt ist.

19. Befestigungsvorrichtung nach einem der Ansprüche 1 bis 18, dadurch gekennzeichnet, daß das freie Stegende (34) der Stegfortsätze (33) jeweils in Richtung zum Gegenhalter (9) weist und daß der Abstand zwischen diesen Stegenden (34) und dem Gegenhalter (9) den Stellweg der in Einführrichtung relativ zueinander verstellbaren Bauteile (6, 9) festlegt oder zumindest in einer Endstellung begrenzt.

20. Befestigungsvorrichtung nach einem der Ansprüche 1 bis 19, dadurch gekennzeichnet, daß die Stegfortsätze (33) vorzugsweise im Verbindungs- oder Biegungsbereich (35) zwischen ihrem zum Gegenhalter (9) weisenden Teilbereich und dem Haltesteg (19) eine nachgiebige Schwächungs- oder Biegestelle aufweisen und daß diese Schwächungsstelle als Einschnürung oder dergleichen Querschnittsverengung (36) ausgebildet ist.

21. Befestigungsvorrichtung nach einem der Ansprüche 1 bis 20, dadurch gekennzeichnet, daß die Verbindungsstege (16) eine Einschwenkbewegung der Stützstege (10) in deren V- oder U-förmigem Teilbereich begrenzen und daß die Verbindungsstege (16) dazu zumindest bereichsweise in dem zwischen diesen Teilbereichen gebildeten Freiraum (37) des Stützteiles (6) angeordnet sind.

22. Befestigungsvorrichtung nach einem der Ansprüche 1 bis 21, dadurch gekennzeichnet, daß die Verbindungsstege (16) ebenfalls jeweils zumindest bereichsweise V- oder U-förmig ausgebildet sind und mit diesen V- oder U-förmigen Teilbereichen in dem zwischen den V- oder U-förmigen Teilbereichen der Stützstege (10) gebildeten Freiraum (37) wenigstens bereichsweise angeordnet sind.

23. Befestigungsvorrichtung nach einem der Ansprüche 1 bis 22, dadurch gekennzeichnet, daß an den Verbindungsstegen (16) im Bereich ihrer Rastvorsprünge (17) jeweils zumindest ein den dem freien Stegende der Haltestege (19) zugewandten Öffnungsrand der Einrastöffnung (18) hintergreifender Widerhaken (38) vorgesehen ist.

24. Befestigungsvorrichtung nach einem der Ansprüche 1 bis 23, dadurch gekennzeichnet, daß die Längserstreckung des Stützteiles (6) in Schienen-Längsrichtung größer als der lichte Abstand der die Schienenöffnung (2) begrenzenden Schienen-Längswände (3) ist.

25. Befestigungsvorrichtung nach einem der Ansprüche 1 bis 24, dadurch gekennzeichnet, daß der Gewindestab (8) an seinem dem Verankerungsteil (7, 7', 23) zugewandten Endbereich eine Schraubsicherung aufweist, die vorzugsweise als Querschnittserweiterung ausgebildet ist.

26. Befestigungsvorrichtung nach einem der Ansprüche 1 bis 25, dadurch gekennzeichnet, daß das Stützteil zumindest zwei in Einführrichtung der Verankerungseinheit überstehende und mit ihren freien Endbereichen elastisch zueinander bewegbare Stützstege aufweist, daß die Stützstege an diesen freien Endbereichen zum Hintergreifen der Haltevorsprünge nach außen vorstehen und daß der Verbindungsstab zum Sichern und/oder Aufspreizen der Stützstege in der ausgefederten Einraststellung in deren Bereich einschraubbar oder einschiebbar ist.

27. Befestigungsvorrichtung nach einem der vorstehenden Ansprüche, dadurch gekennzeichnet, daß das Stützteil (6) und der Gegenhalter (9) der Verankerungseinheit (23) über zumindest einen Zwischensteg (24) einstückig miteinander verbunden sind, welcher (24) zum Einspannen der Haltevorsprünge (5) nachgiebig ausgebildet ist.

28. Befestigungsvorrichtung nach Anspruch 27, dadurch gekennzeichnet, daß der Zwischensteg (24) oder die Zwischenstege nach außen, insbesondere bis etwa zur benachbarten Innenwand (3) der Montageschiene (1) aufweitbar ist (sind).

29. Befestigungsvorrichtung nach Anspruch 27 oder 28, dadurch gekennzeichnet, daß die einstückige Verankerungseinheit (23) als Spritzgußteil oder aus einem abgelängten Profilstab hergestellt ist, welcher als Alu-Strangfließpreßteil, als Stahlprofil oder als Kunststoff-Extrusionsteil ausgebildet ist.

30. Befestigungsvorrichtung nach einem der Ansprüche 1 bis 29, dadurch gekennzeichnet, daß die die freien Schienen-Längsränder (4) beaufschlagenden Bereiche des Gegenhalters (9) diese Schienen-Längsränder (4) außenseitig umgreifen.

31. Befestigungsvorrichtung nach einem der Ansprüche 1 bis 30, dadurch gekennzeichnet, daß der Gegenhalter (9) eine Durchstecköffnung (14) hat, die der Gewindestab (8) durchsetzt und daß auf den Gewindestab (8) eine Kontermutter (15) aufschraubbar ist, welche den Gegenhalter (9) auf der dem Stützteil (6) abgewandten Seite beaufschlagt.

## Claims

1. An attachment means for the attachment of pipes or similar objects, having an anchoring unit (7,7',23) and a mounting rail (1) with a rail opening (2), this rail opening (2) being bordered on both sides by longitudinal rail walls (3) which have holding projections (5) on their respectively facing interior sides which grip behind the supporting part (6) of an anchoring unit (7,7',23) which (7,7',23) is connected to the object which is to be attached via a connection bar (8) wherein the anchoring unit (7,7',23) has an arm bracket (9) which acts upon the free rail longitudinal edges (4), characterised in that the supporting part (6) of the anchoring unit (7,7',23) can be inserted engagingly into the rail opening (2), transversely to the longitudinal rail direction, in a pre-mounting position, and that the supporting part (6) has supporting webs (10), which are elastically movable towards each other, which grip behind the holding projections (5) of the mounting rail (1) in the engaged position of the anchoring unit (7,7',23).

2. An attachment means according to claim 1, characterised in that the supporting webs (10), which can be elastically moved towards each other, of the supporting part (6) are angled outwards in opposite directions from the insertion end towards the free web ends (11).

3. An attachment means according to one of claims 1 and 2, characterised in that the supporting webs (10) are designed to have a substantially V- or a U-shape, at least in part.

4. An attachment means according to one of claims 1 to 3, characterised in that the supporting webs (10) are preferably connected together, each with a web end of their V- or U-shape, and gripped behind the neighbouring holding projection (5) with the other free web end (11).

5. An attachment means according to one of claims 1 to 4, characterised in that the supporting webs (10), which are elastically movable towards one another, can be expanded in the spreading direction with an increasing load on the anchoring unit (7,7',23).

6. An attachment means according to one of claims 1 to 5, characterised in that the connecting bar (8) is designed as a threaded bar which acts in the connection area of the supporting webs (10) and that a threaded hole (13) is preferably provided in this connection area (12) into which the threaded bar (8) can be screwed.

7. An attachment means according to one of claims 1 to 6, characterised in that the supporting part (6) and the arm bracket (9) of the anchoring unit (7,7',23) are adjustable in relation to one another for tensioning the holding projections (5) of the mounting rail (1) in the direction of insertion.

8. An attachment means according to one of claims 1 to 7, characterised in that the supporting part (6) and the arm bracket (9) of the anchoring unit (7,7',23) are substantially connected to one another in a torsionally rigid manner.

9. An attachment means according to one of claims 1 to 8, characterised in that the supporting part (6) and/or the arm bracket (9) has, or have, connecting webs (16) which can locate in the respective other component (9,6) of the anchoring unit (7,7',23).

10. An attachment means according to one of claims 1 to 9, characterised in that the supporting part (6) has sprung-elastic connecting webs (16) which can locate in at least one locating projection (17) respectively in a locating opening (18) on the arm bracket (9).

11. An attachment means according to one of claims 1 to 10, characterised in that a connecting web (16) is provided on both sides of the supporting webs (10) which can be elastically moved towards one another.

12. An attachment means according to one of claims 1 to 11, characterised in that the arm bracket (9) has holding webs (19) which each have a locating opening (18) and project into the rail opening (2).

13. An attachment means according to one of claims 1 to 12, characterised in that the supporting part (6) and the arm bracket (9) are each designed approximately cross-shaped and that the free end areas of the one component (6,9) are set at an angle in the direction of the respective other component (9,6) of the anchoring unit (7,7').

14. An attachment means according to one of claims 1 to 13, characterised in that the supporting part (6) and the arm bracket (9) interlock with each other.

15. An attachment means according to one of claims 1 to 14, characterised in that the connecting webs (16) of the supporting part (6) overlap the holding webs (19) of the arm bracket (9) and that the holding webs (19) each have guide webs (20) on their free end area, which are arranged on both sides of the connecting web (16), which extends over the holding web (19).

16. An attachment means according to one of claims 1 to 15, characterised in that the holding webs (19) of the arm bracket (9) are each connected with at least one web extension (33), which (33) project on the facing sides of the holding webs (19) and are designed as an abutment for the supporting part (6).

17. An attachment means according to one of claims 1 to 16, characterised in that the connecting webs (16) are each preferably angled obliquely outwards from their detent projection (17) in the direction of the free web end (11).

18. An attachment means according to one of claims 1 to 17, characterised in that the adjustment travel of the components (6,9) of the anchoring unit (7,7'), which can be adjusted in relation to one another in the direction of insertion, are limited by the connecting webs (16) of the supporting part (6) which extend over the holding webs (19), and/or by the opening edges (21), facing the supporting part (6), of the locating openings (18) of the arm bracket (9) which work together with the detent projections (17).

19. An attachment means according to one of claims 1 to 18, characterised in that the free web end (34) of the web extensions (33) respectively points in the direction of the arm bracket (9), and that the distance between these web ends (34) and the arm bracket (9) specifies the adjustment travel of the components which are adjustable relative to one another in the direction of insertion (6,9), or at least limits them in a final position.

20. An attachment means according to one of claims 1 to 19, characterised in that the web extensions (33) have a flexible weak or bending point, preferably in the connection or bending area (35) between the partial area pointing towards the arm bracket (9) and the holding web (19), and that this weak point is designed as a pinch or a similar narrowing of the cross-section (36).

21. An attachment means according to one of claims 1 to 20, characterised in that the connecting webs (16) limit an inward-pivoting movement of the supporting webs (10) in their V- or U-shaped partial area, and that the connecting webs (16) are arranged at least partially in the free space (37) of the supporting part (6) formed between these partial areas.

22. An attachment means according to one of claims 1 to 21, characterised in that the connecting webs (16) are also at least partially V- or U-shaped and are at least partially arranged with these V- or U-shaped partial areas in the free space (37) formed between the V- or U-shaped partial areas of the supporting webs (10).

23. An attachment means according to one of claims 1 to 22, characterised in that in each case at least one barb (38), gripping behind the opening edge of the locating opening (18) which faces the free web end of the holding web (19), is provided at the connecting webs (16) in the area of their detent projections (17).

24. An attachment means according to one of claims 1 to 23, characterised in that the longitudinal extent of the supporting part (6) in the longitudinal direction of the rails is greater than the internal distance of the longitudinal rail walls (3) which are adjacent to the rail opening (2).

25. An attachment means according to one of claims 1 to 24, characterised in that the threaded bar (8) has a screw securing means in its end area which faces the anchoring part (7,7',23), which is preferably designed as an expansion of the cross-section.

26. An attachment means according to one of claims 1 to 25, characterised in that the supporting part has at least two supporting webs, projecting beyond the anchoring unit in the insertion direction, and being elastically movable towards one another with their free end areas, that the supporting webs project outwards at these free end areas in order to grip behind the holding projections, and that the connection rod can be pushed or screwed in in this area in order to secure and/or spread the supporting webs into their sprung located position.

27. An attachment means according to one of the preceding claims, characterised in that the supporting part (6) and the arm bracket (9) of the anchoring unit (23) are connected together as one unit via at least an intermediary web (24), which (24) is designed to be bendable to tension the holding projections (5).

28. An attachment means according to claim 27, characterised in that the intermediary web (24) or the intermediary webs can be extended outwards, especially as far as the adjoining interior wall (3) of the mounting rail (1).

29. An attachment means according to claim 27 or 28, characterised in that the one-piece anchoring unit (23) is produced as an injection moulded part or as a crosscut profile bar, which is designed as an aluminium extruded part, as a steel profile or as a plastic extruded part.

30. An attachment means according to one of claims 1 to 29, characterised in that the areas of the arm bracket (9) which act upon the free rail longitudinal edges (4) surround these rail longitudinal edges (4) on the outside.

31. An attachment means according to one of claims 1 to 30, characterised in that the arm bracket (9) has an opening (14) which is penetrated by the threaded rod (8), and that a locknut (15) can be screwed onto the threaded rod (8) which acts upon the arm bracket (9) on the side facing away from the supporting part (6).

## Revendications

1. Dispositif de fixation pour fixer des tuyaux ou des objets similaires, qui comporte une unité d'ancrage (7, 7', 23) et un rail de montage (1) muni d'une ouverture (2), laquelle ouverture (2) est délimitée de part et d'autre par des parois longitudinales (3) du rail qui présentent sur leurs faces intérieures se faisant face des saillies de fixation (5) derrière lesquelles s'enclenche l'élément d'appui (6) d'une unité d'ancrage (7, 7', 23) qui (7, 7', 23) est reliée à l'objet à fixer par une tige de liaison (8), sachant que l'unité d'ancrage (7, 7', 23) comporte un support (9) sollicitant les bords libres (4) du rail, caractérisé en ce que l'élément d'appui (6) de l'unité d'ancrage (7, 7', 23) peut être introduit dans l'ouverture (2) du rail transversalement à la direction longitudinale du rail et enclenchée dans une position de prémontage, et en ce que pour ce faire, l'élément d'appui (6) comporte des ailes d'appui (10) mobiles de façon élastique l'une par rapport à l'autre, qui sont enclenchées derrière les saillies de fixation (5) du rail de montage (1) lorsque l'unité d'ancrage (7, 7', 23) est en position enclenchée.

2. Dispositif de fixation selon la revendication 1, caractérisé en ce que les ailes d'appui (10) mobiles de façon élastique l'une par rapport à l'autre de l'élément d'appui (6) sont pliées vers l'extérieur dans des sens supposés depuis l'extrémité d'introduction de l'élément d'appui vers les extrémités libres (11) des ailes.

3. Dispositif de fixation selon l'une des revendications 1 et 2, caractérisé en ce que les ailes d'appui (10) sont au moins partiellement réalisées approximativement en forme de V ou de U.

4. Dispositif de fixation selon l'une des revendications 1 à 3, caractérisé en ce que les ailes d'appui (10) sont chaque fois reliées entre elles de façon à former une seule pièce par l'une des extrémités du V ou du U qu'elles forment et viennent s'enclencher avec l'autre extrémité libre (11) derrière la saillie de fixation (5) adjacente.

5. Dispositif de fixation selon l'une des revendications 1 à 4, caractérisé en ce que les ailes d'appui (10) mobiles de façon élastique l'une par rapport à l'autre peuvent s'écarter davantage dans la direction d'écartement lorsque la charge de l'unité d'ancrage (7, 7', 23) augmente.

6. Dispositif de fixation selon l'une des revendications 1 à 5, caractérisé en ce que la tige de liaison (8) est réalisée en tant que tige filetée et agit sur la zone de liaison des ailes d'appui (10), et en ce que de préférence un taraudage (13) est prévu à cet effet dans cette zone de liaison (12), dans lequel la tige filetée (8) peut être vissée.

7. Dispositif de fixation selon l'une des revendications 1 à 6, caractérisé en ce que l'élément d'appui (6) et le support (9) de l'unité d'ancrage (7, 7', 23) peuvent être déplacés relativement l'un par rapport à l'autre dans la direction d'introduction, pour serrer les saillies de fixation (5) du rail de montage (1).

8. Dispositif de fixation selon l'une des revendications 1 à 7, caractérisé en ce que l'élément d'appui (6) et le support (9) de l'unité d'ancrage (7, 7', 23) sont reliés entre eux essentiellement de manière à ne pas tourner.

9. Dispositif de fixation selon l'une des revendications 1 à 8, caractérisé en ce que l'élément d'appui (6) et/ou le support (9) comportent des ailes de liaison (16) qui peuvent chaque fois être enclenchées sur l'autre élément (9, 6) de l'unité d'ancrage (7, 7', 23).

10. Dispositif de fixation selon l'une des revendications 1 à 9, caractérisé en ce que l'élément d'appui (6) comporte des ailes de liaison (16) faisant ressort qui peuvent être enclenchées par au moins une saillie d'enclenchement (17) dans une ouverture d'enclenchement (18) sur le support (9).

11. Dispositif de fixation selon l'une des revendications 1 à 10, caractérisé en ce qu'une aile de liaison (16) est chaque fois prévue de chaque côté des ailes d'appui (10) mobiles de façon élastique l'une par rapport à l'autre.

12. Dispositif de fixation selon l'une des revendications 1 à 11, caractérisé en ce que le support (9) comporte des ailes de fixation (19) qui présentent chacune une ouverture d'enclenchement (18) et qui font saillie dans l'ouverture (2) du rail.

13. Dispositif de fixation selon l'une des revendications 1 à 12, caractérisé en ce que l'élément d'appui (6) et le support (9) sont chacun réalisés approximativement en forme de croix, et en ce que les zones d'extrémité libres de l'un des éléments (6, 9) sont chaque fois coudées en direction de l'autre élément (9, 6) de l'unité d'ancrage (7, 7').

14. Dispositif de fixation selon l'une des revendications 1 à 13, caractérisé en ce que l'élément d'appui (6) et le support (9) sont encastrés l'un dans l'autre.

15. Dispositif de fixation selon l'une des revendications 1 à 14, caractérisé en ce que les ailes de liaison (16) de l'élément d'appui (6) sont enclenchées sur les ailes de fixation (19) du support (9), et en ce que les ailes de fixation (19) présentent au niveau de leur zone d'extrémité libre des ailes de guidage (20) qui sont disposées de part et d'autre de l'aile de liaison (16) enclenchée sur l'aile de fixation (19).

16. Dispositif de fixation selon l'une des revendications 1 à 15, caractérisé en ce que les ailes de fixation (19) du support (9) sont chacune reliées à au moins un prolongement d'aile (33), lesquels (33) font saillie des faces tournées l'une vers l'autre des ailes de fixation (19) et sont réalisés en tant que support pour l'élément d'appui (6).

17. Dispositif de fixation selon l'une des revendications 1 à 16, caractérisé en ce que les ailes de liaison (16) sont coudées de préférence en biais vers l'extérieur à partir de leur saillie d'enclenchement ( 17) en direction de l'extrémité libre (11) de l'aile.

18. Dispositif de fixation selon l'une des revendications 1 à 17, caractérisé en ce que le trajet disponible pour déplacer les éléments (6, 9) de l'unité d'ancrage (7, 7'), qui sont mobiles l'un par rapport à l'autre dans la direction d'introduction, entre les ailes de liaison ( 16) de l'élément d'appui (6) qui sont enclenchées sur les ailes de fixation (19) et/ou entre les bords (21) tournés vers l'élément d'appui (6) des ouvertures d'enclenchement (18) du support (9) qui coopèrent avec les saillies d'enclenchement ( 17) est limité.

19. Dispositif de fixation selon l'une des revendications 1 à 18, caractérisé en ce que l'extrémité libre (34) des prolongements d'aile (33) pointe vers le support (9), et en ce que l'écart entre ces extrémités d'aile (34) et le support (9) fixe le trajet disponible pour déplacer les éléments (6, 9) qui sont mobiles l'un par rapport à l'autre dans la direction d'introduction, ou tout au moins marque une position finale.

20. Dispositif de fixation selon l'une des revendications 1 à 19, caractérisé en ce que les prolongements d'aile (33) présentent, de préférence dans la zone de liaison ou de courbure (35), entre leur segment pointant vers le support (9) et l'aile de fixation (19), un point d'affaiblissement ou de pliage flexible, et en ce que ce point d'affaiblissement est réalisé en tant qu'étranglement ou rétrécissement de section (36) analogue.

21. Dispositif de fixation selon l'une des revendications 1 à 20, caractérisé en ce que les ailes de liaison (16) délimitent un mouvement de pivotement des ailes d'appui (10) dans leur partie en forme de V ou de U, et en ce qu'à cet effet, les ailes de liaison ( 16) sont disposées au moins partiellement dans l'espace libre (37) de l'élément d'appui (6) formé entre ces parties.

22. Dispositif de fixation selon l'une des revendications 1 à 21, caractérisé en ce que les ailes de liaison (16) sont également réalisées au moins partiellement en forme de V ou de U et sont disposées, au moins partiellement, avec ces segments en V ou en U dans l'espace libre (37) formé entre les segments en V ou en U des ailes d'appui (10).

23. Dispositif de fixation selon l'une des revendications 1 à 22, caractérisé en ce qu'au moins un crochet (38) venant s'agripper derrière le bord de l'ouverture d'enclenchement (18) qui est tourné vers l'extrémité libre des ailes de fixation (19) est prévu sur les ailes de liaison (16), au voisinage de leurs saillies d'enclenchement (17).

24. Dispositif de fixation selon l'une des revendications 1 à 23, caractérisé en ce que l'étendue longitudinale de l'élément d'appui (6) dans la direction longitudinale du rail est supérieure à l'écartement des parois longitudinales (3) délimitant l'ouverture (2) du rail.

25. Dispositif de fixation selon l'une des revendications 1 à 24, caractérisé en ce que la tige filetée (8) présente à son extrémité tournée vers l'unité d'ancrage (7, 7', 23) une sécurité de vissage qui est de préférence réalisée en tant qu'élargissement de la section.

26. Dispositif de fixation selon l'une des revendications 1 à 25, caractérisé en ce que l'élément d'appui présente au moins deux ailes d'appui qui font saillie dans la direction d'introduction de l'unité d'ancrage et dont les zones d'extrémité libres sont mobiles l'une par rapport à l'autre de façon élastique, en ce que les ailes d'appui font saillie vers l'extérieur avec leurs zones d'extrémité libres pour s'enclencher derrière les saillies de fixation, et en ce que la tige de liaison pour assurer ou écarter les ailes d'appui dans la position d'enclenchement finale peut être vissée ou insérée dans la zone de ces dernières.

27. Dispositif de fixation selon l'une des revendications précédentes, caractérisé en ce que l'élément d'appui (6) et le support (9) de l'unité d'ancrage (23) sont reliés entre eux de façon à former une seule pièce par au moins une entretoise (24) qui (24) est flexible de façon à pouvoir serrer les saillies de fixation (5).

28. Dispositif de fixation selon la revendication 27, caractérisé en ce que l'entretoise (24) ou les entretoises peuvent être écartées vers l'extérieur notamment jusqu'à environ la paroi intérieure adjacente (3) du rail de montage (1).

29. Dispositif de fixation selon la revendication 27 ou 28, caractérisé en ce que l'unité d'ancrage d'un seul tenant (23) est fabriquée en tant que pièce moulée par injection ou débitée d'une barre profilée qui est elle-même réalisée en tant que pièce d'aluminium filée, profilé d'acier ou pièce en matière plastique extrudée.

30. Dispositif de fixation selon l'une des revendications 1 à 29, caractérisé en ce que les zones du support (9) sollicitant les bords longitudinaux libres (4) du rail enserrent ces bords longitudinaux (4) du rail de l'extérieur.

31. Dispositif de fixation selon l'une des revendications 1 à 30, caractérisé en ce que le support (9) comporte une ouverture (14) que traverse la tige filetée (8), et en ce qu'un contre-écrou (15) peut être vissé sur la tige filetée (8), qui porte sur la face du support (9) qui est opposée à l'élément d'appui (6).
